(19) Europäisches Patentamt
European Patent Office
Office européen des brevets

(11) **EP 3 099 119 B1**

(12) **EUROPEAN PATENT SPECIFICATION**

(45) Date of publication and mention
of the grant of the patent:
**19.09.2018 Bulletin 2018/38**

(21) Application number: **15739879.3**

(22) Date of filing: **22.01.2015**

(51) Int Cl.:
*H04W 52/32* (2009.01)   *H04W 52/14* (2009.01)
*H04B 7/26* (2006.01)   *H04J 11/00* (2006.01)
*H04W 72/04* (2009.01)   *H04W 88/08* (2009.01)
*H04W 52/16* (2009.01)   *H04L 1/18* (2006.01)
*H04L 5/00* (2006.01)   *H04L 5/14* (2006.01)

(86) International application number:
**PCT/KR2015/000667**

(87) International publication number:
**WO 2015/111928 (30.07.2015 Gazette 2015/30)**

(54) **METHOD FOR CONTROLLING TRANSMISSION POWER OF SOUNDING REFERENCE SIGNAL ON SPECIAL SUBFRAME IN TDD-TYPE WIRELESS COMMUNICATION SYSTEM AND DEVICE THEREFOR**

VERFAHREN ZUR SENDELEISTUNGSREGELUNG EINES TONREFERENZSIGNALS AUF SPEZIELLEN SUBFRAMES IN EINEM TDD-DRAHTLOSKOMMUNIKATIONSSYSTEM UND VORRICHTUNG DAFÜR

PROCÉDÉ DE RÉGLAGE DE PUISSANCE DE TRANSMISSION D'UN SIGNAL DE SONDAGE DE RÉFÉRENCE SUR UNE SOUS-TRAME SPÉCIAL DANS UN SYSTÈME DE COMMUNICATIONS SANS FIL DE TYPE TDD ET DISPOSITIF ASSOCIÉ.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.01.2014   US 201461931559 P**
**30.01.2014   US 201461933321 P**

(43) Date of publication of application:
**30.11.2016   Bulletin 2016/48**

(73) Proprietor: **LG Electronics Inc.**
**Seoul 150-721 (KR)**

(72) Inventors:
• **PARK, Jonghyun**
**Seoul 137-893 (KR)**
• **SEO, Hanbyul**
**Seoul 137-893 (KR)**
• **LEE, Seungmin**
**Seoul 137-893 (KR)**

(74) Representative: **Katérle, Axel**
**Wuesthoff & Wuesthoff**
**Patentanwälte PartG mbB**
**Schweigerstraße 2**
**81541 München (DE)**

(56) References cited:
**EP-A1- 3 038 281     WO-A1-2010/151196**
**WO-A1-2013/141505     KR-A- 20130 018 052**

• **CATT: "SRS power scaling in UpPTS", 3GPP DRAFT; R1-124752, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. New Orleans, USA; 20121108 - 20121112 3 November 2012 (2012-11-03), XP050662767, Retrieved from the Internet: URL:http://www.3gpp.org/ftp/tsg_ran/WG1_RL 1/TSGR1_71/Docs/ [retrieved on 2012-11-03]**

- **MOTOROLA: "SRS open issues", 3GPP DRAFT; R4-093866 POWER TIME MASKS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050393450, [retrieved on 2009-10-06]**
- **SAMSUNG: 'DL and UL Power Control for eIMTA' 3GPP TSG-RAN WG1 MEETING #73 20 May 2013, XP050697749**

- **NOKIA CORPORATION ET AL.: 'Enhanced uplink power control for dynamic TDD UL/DL reconfiguration' 3GPP TSG-RAN WG1 MEETING #73 20 May 2013, XP050698061**

**Description**

TECHNICAL FIELD

The present invention relates to a wireless communication system, and more particularly, to a method of controlling transmit power of a sounding reference signal on a special subframe in a wireless communication system and an apparatus therefor.

BACKGROUND ART

As an example of a mobile communication system to which the present invention is applicable, a 3rd generation partnership project long term evolution (hereinafter, referred to as LTE) communication system is described in brief.

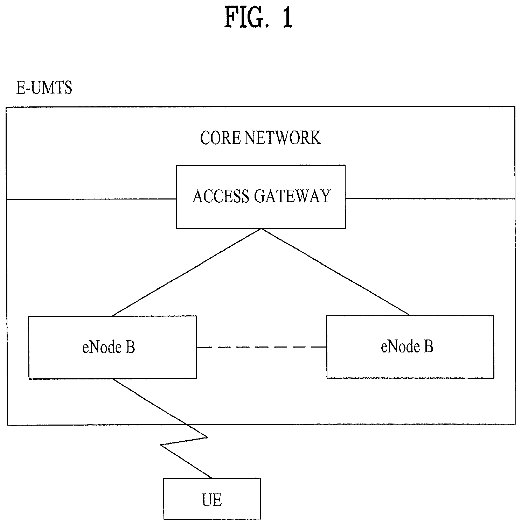

FIG. 1 is a diagram schematically illustrating a network structure of an E-UMTS as an exemplary radio communication system. An evolved universal mobile telecommunications system (E-UMTS) is an advanced version of a legacy universal mobile telecommunications system (UMTS) and basic standardization thereof is currently underway in 3GPP. E-UMTS may be generally referred to as an LTE system. For details of the technical specifications of UMTS and E-UMTS, reference can be made to Release 7 and Release 8 of "3rd Generation Partnership Project; Technical Specification Group Radio Access Network".

Referring to FIG. 1, the E-UMTS includes a user equipment (UE), evolved Node Bs (eNode Bs or eNBs), and an access gateway (AG) which is located at an end of an evolved UMTS terrestrial radio access network (E-UTRAN) and connected to an external network. The eNBs may simultaneously transmit multiple data streams for a broadcast service, a multicast service, and/or a unicast service.

One or more cells are present per eNB. A cell is configured to use one of bandwidths of 1.25, 2.5, 5, 10, 15, and 20MHz to provide a downlink or uplink transmission service to multiple UEs. Different cells may be configured to provide different bandwidths. The eNB controls data transmission and reception to and from a plurality of UEs. Regarding downlink (DL) data, the eNB transmits DL scheduling information to notify a corresponding UE of a time/frequency domain within which data is to be transmitted, coding, data size, and hybrid automatic repeat and request (HARQ)-related information by transmitting DL scheduling information to the UE. In addition, regarding uplink (UL) data, the eNB transmits UL scheduling information to a corresponding UE to inform the UE of an available time/frequency domain, coding, data size, and HARQ-related information. An interface for transmitting user traffic or control traffic between eNBs may be used. A core network (CN) may include the AG and a network node for user registration of the UE. The AG manages mobility of a UE on a tracking area (TA) basis, each TA including a plurality of cells.

Although radio communication technology has been developed up to LTE based on wideband code division multiple access (WCDMA), demands and expectations of users and providers continue to increase. In addition, since other radio access technologies continue to be developed, new advances in technology are required to secure future competitiveness. For example, decrease of cost per bit, increase of service availability, flexible use of a frequency band, a simplified structure, an open interface, appropriate power consumption of a UE, etc. are required.

WO 2010/151196 A1 relates to a method in a wireless communications network for adaption of power control setting. The document discloses the possibility of having difference SRS power control settings in different types uplink subframes and transmission slots such a Uplink Part of Time Slot (UpPTS).

3GPP contribution paper RI-124752, "SRS power scaling in UpPTS", by CATT discloses a proposal that it shall be clarified that SRS power scaling in a subframe shall be applied only to the SRS transmission in the SC-FDMA symbol in which the total SRS transmit power of the UE exceeds Pcmax.

3GPP contribution paper R4-093865, "SRS Open Issues", suggests in section 2.2 that a transient period should be inserted between the first and second SRSs only if a frequency hopping or the power change is occurred between the first and second SRSs.

DISCLOSURE OF THE INVENTION

TECHNICAL TASK

In the following description, the present invention intends to provide a method of controlling transmit power of a sounding reference signal on a special subframe in a wireless communication system of a TDD scheme and an apparatus therefor based on the aforementioned discussion.

TECHNICAL SOLUTION

To achieve these and other advantages and in accordance with the purpose of the present invention, as embodied and broadly described, a method of transmitting an SRS (sounding reference signal), which is transmitted by a UE (user equipment) to a base station (BS) in a TDD (time division duplex) system, includes the steps of configuring a first power control parameter set and a second power control parameter set through a higher layer and transmitting the SRS one time or two times to the BS in a special subframe. In this case, transmit power of the SRS can be determined based on at least one of the first power control parameter set and the second power control parameter set according to the count of transmitting the SRS in the special subframe.

Preferably, if the SRS is transmitted one time in the special subframe, the transmit power of the SRS can be determined based on one of the first power control parameter set and the second power control parameter set. If the SRS is transmitted two times in the special subframe, transmit power of a first SRS can be determined based on the first power control parameter set and transmit power of a second SRS can be determined based on the second power control parameter set.

Or, if the SRS is transmitted two times in the special subframe, transmit power of a second SRS can be determined based on a power control parameter set corresponding to an uplink data channel after the special subframe. In this case, it is preferable to determine transmit power of a first SRS based on a power control parameter set corresponding to the special subframe.

To further achieve these and other advantages and in accordance with the purpose of the present invention, a user equipment (UE) in a TDD (time division duplex) includes a wireless communication module configured to transceive a signal with a base station (BS) and a processor configured to process the signal, the processor configured to control an SRS (sounding reference signal) to be transmitted to the BS one time or two times in a special subframe using a first power control parameter set and a second power control parameter set configured through a higher layer. In this case, transmit power of the SRS can be determined based on at least one of the first power control parameter set and the second power control parameter set according to the count of transmitting the SRS in the special subframe.

In the embodiments, the first power control parameter set corresponds to a parameter set for a subframe fixed as an uplink subframe and the second power control parameter set corresponds to a parameter set for an uplink subframe capable of being changed to a downlink subframe according to an indication of the BS.

ADVANTAGEOUS EFFECTS

According to embodiments of the present invention, a user equipment can efficiently control transmit power of a sounding reference signal on a special subframe in a wireless communication system of a TDD scheme.

It will be appreciated by persons skilled in the art that that the effects that can be achieved through the present invention are not limited to what has been particularly described hereinabove and other advantages of the present invention will be more clearly understood from the following detailed description.

DESCRIPTION OF DRAWINGS

FIG. 1 is a diagram schematically illustrating a network structure of an E-UMTS as an exemplary radio communication system;

FIG. 2 is a diagram illustrating structures of a control plane and a user plane of a radio interface protocol between a UE and an E-UTRAN based on the 3GPP radio access network specification;

FIG. 3 is a diagram illustrating physical channels used in a 3GPP system and a general signal transmission method using the same;

FIG. 4 is a diagram illustrating the structure of a DL radio frame used in an LTE system;

FIG. 5 is a diagram illustrating the structure of a UL subframe in an LTE system;

FIG. 6 illustrates a structure of a radio frame in an LTE TDD system;

FIG. 7 is a view illustrating concept of a carrier aggregation scheme;

FIG. 8 is a diagram for an example of dividing a radio frame into a subframe set #1 and a subframe set #2;

FIG. 9 is a flowchart for an example of performing power control of an SRS in a special subframe according to an embodiment of the present invention;

FIG. 10 is a block diagram of a communication apparatus according to an embodiment of the present invention.

BEST MODE

MODE FOR INVENTION

Hereinafter, structures, operations, and other features of the present invention will be readily understood from the embodiments of the present invention, examples of which are illustrated in the accompanying drawings. Embodiments which will be described hereinbelow are examples in which technical features of the present invention are applied to a 3GPP system.

Although the embodiments of the present invention will be described based on an LTE system and an LTE-advanced (LTE-A) system, the LTE system and the LTE-A system are purely exemplary and the embodiments of the present invention can be applied to any communication system corresponding to the aforementioned definition. In addition, although the embodiments of the present invention will be described based on frequency division duplexing (FDD), the FDD mode is purely exemplary and the embodiments of the present invention can easily be applied to half-FDD (H-FDD) or time division duplexing (TDD) with some modifications. In the present disclosure, a base station (eNB) may be used as a broad meaning including a remote radio head (RRH), an eNB, a transmission point (TP), a reception point (RP), a relay, etc.

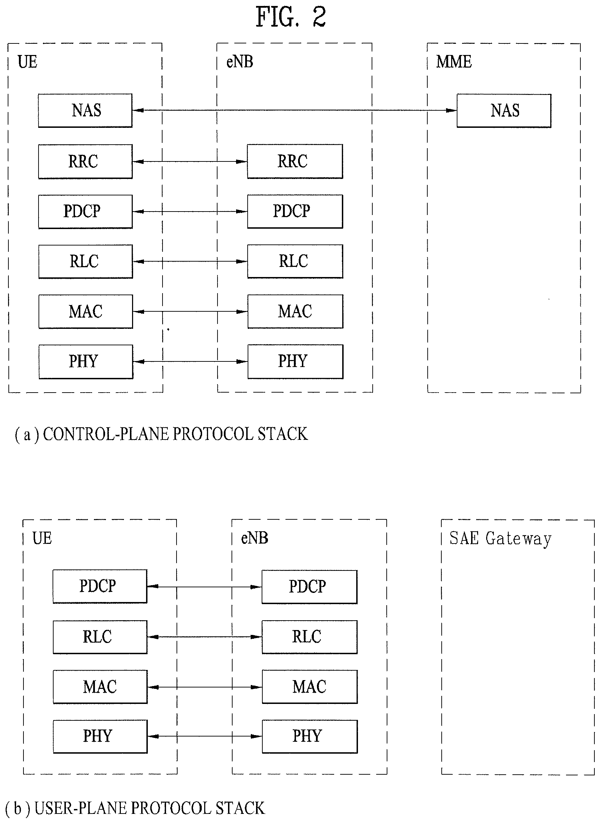

FIG. 2 is a diagram illustrating structures of a control plane and a user plane of a radio interface protocol between a UE and an E-UTRAN based on 3GPP radio access network specifications. The control plane refers to a path used for transmission of control messages, which is used by the UE and the network to manage a call. The user plane refers to a path in which data generated in an application layer, e.g. voice data or Internet packet data, is transmitted.

A physical layer of a first layer provides an information transfer service to an upper layer using a physical channel. The physical layer is connected to a media access control (MAC) layer of an upper layer via a transmission channel. Data is transmitted between the MAC layer and the physical layer via the transmission channel. Data is also transmitted between a physical layer of a transmitter and a physical layer of a receiver via a physical channel. The physical channel uses time and frequency as radio resources. Specifically, the physical channel is modulated using an orthogonal frequency division multiple Access (OFDMA) scheme in DL and is modulated using a single-carrier frequency division multiple access (SC-FDMA) scheme in UL.

The MAC layer of a second layer provides a service to a radio link control (RLC) layer of an upper layer via a logical channel. The RLC layer of the second layer supports reliable data transmission. The function of the RLC layer may be implemented by a functional block within the MAC layer. A packet data convergence protocol (PDCP) layer of the second layer performs a header compression function to reduce unnecessary control information for efficient transmission of an Internet protocol (IP) packet such as an IPv4 or IPv6 packet in a radio interface having a relatively narrow bandwidth.

A radio resource control (RRC) layer located at the bottommost portion of a third layer is defined only in the control plane. The RRC layer controls logical channels, transmission channels, and physical channels in relation to configuration, reconfiguration, and release of radio bearers. A radio bearer refers to a service provided by the second layer to transmit data between the UE and the network. To this end, the RRC layer of the UE and the RRC layer of the network exchange RRC messages. The UE is in an RRC connected mode if an RRC connection has been established between the RRC layer of the radio network and the RRC layer of the UE. Otherwise, the UE is in an RRC idle mode. A non-access stratum (NAS) layer located at an upper level of the RRC layer performs functions such as session management and mobility management.

A cell constituting an eNB is set to one of the bandwidths of 1.44, 3, 5, 10, 15 and 20Mhz and provides DL or UL transmission service to a plurality of UEs in the bandwidth. Different cells may be configured so as to provide different bandwidths

DL transmission channels for data transmission from the network to the UE include a broadcast channel (BCH) for transmitting system information, a paging channel (PCH) for transmitting paging messages, and a DL shared channel (SCH) for transmitting user traffic or control messages. Traffic or control messages of a DL multicast or broadcast service may be transmitted through the DL SCH or may be transmitted through an additional DL multicast channel (MCH). Meanwhile, UL transmission channels for data transmission from the UE to the network include a random access channel (RACH) for transmitting initial control messages and a UL SCH for transmitting user traffic or control messages. Logical channels, which are located at an upper level of the transmission channels and are mapped to the transmission channels, include a broadcast control channel (BCCH), a paging control channel (PCCH), a common control channel (CCCH), a multicast control channel (MCCH), and a multicast traffic channel (MTCH).

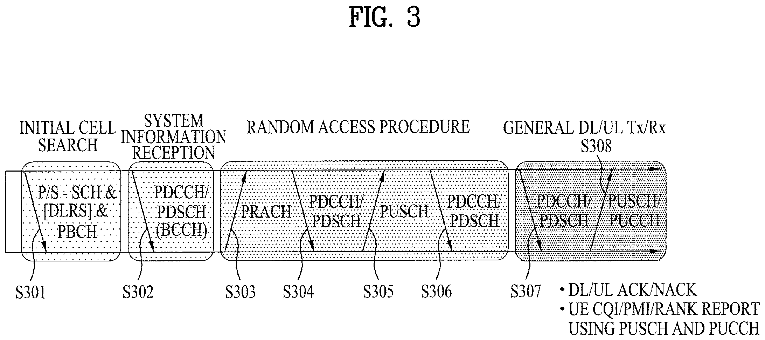

FIG. 3 is a diagram illustrating physical channels used in a 3GPP system and a general signal transmission method using the same.

When power is turned on or the UE enters a new cell, the UE performs an initial cell search procedure such as acquisition of synchronization with an eNB (S301). To this end, the UE may adjust synchronization with the eNB by receiving a primary synchronization channel (P-SCH) and a secondary synchronization channel (S-SCH) from the eNB and acquire information such as a cell identity (ID). Thereafter, the UE may acquire broadcast information within the cell by receiving a physical broadcast channel from the eNB. In the initial cell search procedure, the UE may monitor a DL channel state by receiving a downlink reference signal (DL RS).

Upon completion of the initial cell search procedure, the UE may acquire more detailed system information by receiving a physical downlink control channel (PDCCH) and receiving a physical downlink shared channel (PDSCH) based on information carried on the PDCCH (S302).

Meanwhile, if the UE initially accesses the eNB or if radio resources for signal transmission to the eNB are not present, the UE may perform a random access procedure (S303 to S306) with the eNB. To this end, the UE may transmit a specific sequence through a physical random access channel (PRACH) as a preamble (S303 and S305) and receive a response message to the preamble through the PDCCH and the PDSCH associated with the PDCCH (S304 and S306). In the case of a contention-based random access procedure, the UE may additionally perform a contention resolution procedure.

After performing the above procedures, the UE may receive a PDCCH/PDSCH (S307) and transmit a physical uplink shared channel (PUSCH)/physical uplink control channel (PUCCH) (S308), as a general UL/DL signal transmission procedure. Especially, the UE receives downlink control information (DCI) through the PDCCH. The DCI includes control information such as resource allocation information for the UE and has different formats according to use purpose thereof.

Meanwhile, control information that the UE transmits to the eNB on UL or receives from the eNB on DL includes a DL/UL acknowledgment/negative acknowledgment (ACK/NACK) signal, a channel quality indicator (CQI), a precoding matrix index (PMI), a rank indicator (RI), and the like. In the 3GPP LTE system, the UE may transmit the control information such as CQI/PMI/RI through a PUSCH and/or a PUCCH.

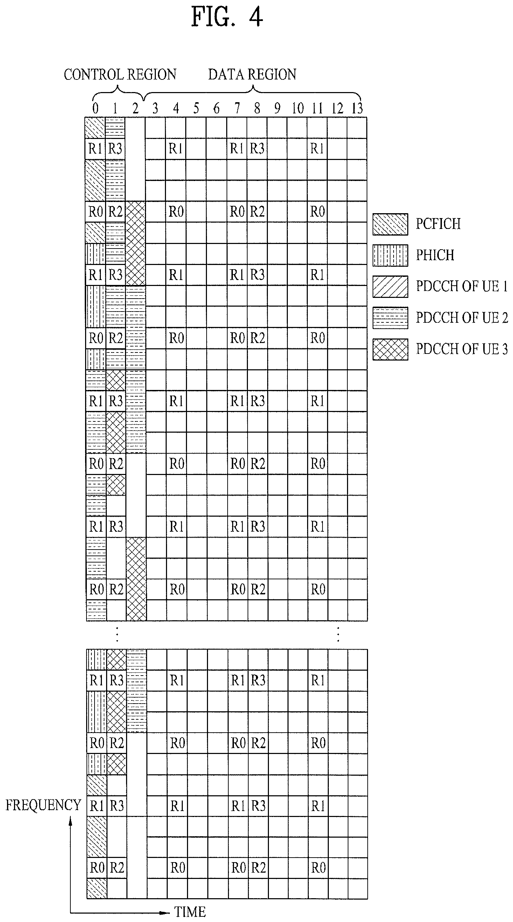

FIG. 4 is a diagram illustrating control channels contained in a control region of one subframe in a DL radio frame.

Referring to FIG. 4, one subframe includes 14 OFDM symbols. The first to third ones of the 14 OFDM symbols may be used as a control region and the remaining 11 to 13 OFDM symbols may be used as a data region, according to subframe configuration. In FIG. 4, R1 to R4 represent reference signals (RSs) or pilot signals for antennas 0 to 3, respectively. The RSs are fixed to a predetermined pattern within the subframe irrespective of the control region and the data region. Control channels are allocated to resources unused for RSs in the control region. Traffic channels are allocated to resources unused for RSs in the data region. The control channels allocated to the control region include a physical control format indicator channel (PCFICH), a physical hybrid-ARQ indicator channel (PHICH), a physical downlink control channel (PDCCH), etc.

The PCFICH, physical control format indicator channel, informs a UE of the number of OFDM symbols used for the PDCCH in every subframe. The PCFICH is located in the first OFDM symbol and is configured with priority over the PHICH and the PDCCH. The PCFICH is composed of 4 resource element groups (REGs) and each of the REGs is distributed over the control region based on a cell ID. One REG includes 4 resource elements (REs). An RE indicates a minimum physical resource defined as one subcarrier by one OFDM symbol. The PCFICH value indicates values of 1 to 3 or values of 2 to 4 depending on bandwidth and is modulated using quadrature phase shift keying (QPSK).

The PHICH, physical hybrid-ARQ indicator channel, is used to carry a HARQ ACK/NACK signal for UL transmission. That is, the PHICH indicates a channel through which DL ACK/NACK information for UL HARQ is transmitted. The PHICH includes one REG and is cell-specifically scrambled. The ACK/NACK signal is indicated by 1 bit and is modulated using binary phase shift keying (BPSK). The modulated ACK/NACK signal is spread with a spreading factor (SF) of 2 or 4. A plurality of PHICHs mapped to the same resource constitutes a PHICH group. The number of PHICHs multiplexed to the PHICH group is determined depending on the number of spreading codes. The PHICH (group) is repeated three times to obtain diversity gain in the frequency domain and/or the time domain.

The PDCCH is allocated to the first n OFDM symbols of a subframe. In this case, n is an integer equal to or greater than 1, indicated by the PCFICH. The PDCCH is composed of one or more control channel elements (CCEs). The PDCCH informs each UE or UE group of information associated with resource allocation of transmission channels, that is, a paging channel (PCH) and a downlink shared channel (DL-SCH), UL scheduling grant, HARQ information, etc. The PCH and the DL-SCH are transmitted through a PDSCH. Therefore, the eNB and the UE transmit and receive data through the PDSCH except for particular control information or service data.

Information indicating to which UE or UEs PDSCH data is to be transmitted and information indicating how UEs should receive and decode the PDSCH data are transmitted on the PDCCH. For example, assuming that a cyclic redundancy check (CRC) of a specific PDCCH is masked by a radio network temporary identity (RNTI) 'A' and information about data transmitted using a radio resource 'B' (e.g. frequency location) and using DCI format 'C', i.e. transport format information (e.g. a transport block size, a modulation scheme, coding information, etc.), is transmitted in a specific subframe, a UE located in a cell monitors the PDCCH, i.e. blind-decodes the PDCCH, using RNTI information thereof in a search space. If one or more UEs having RNTI 'A' are present, the UEs receive the PDCCH and receive a PDSCH indicated by 'B' and 'C' based on the received information of the PDCCH.

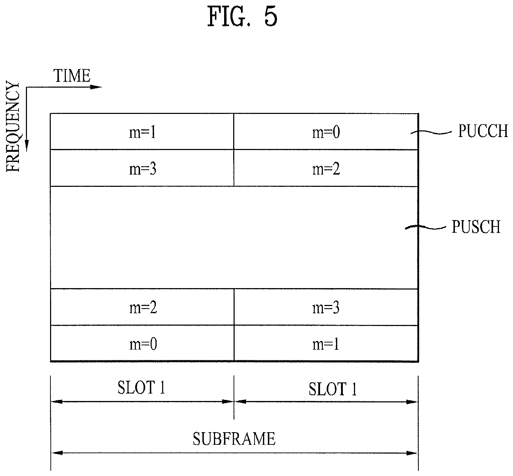

FIG. 5 is a diagram illustrating the structure of a UL subframe in an LTE system.

Referring to FIG. 5, an uplink subframe is divided into a region to which a PUCCH is allocated to transmit control information and a region to which a PUSCH is allocated to transmit user data. The PUSCH is allocated to the middle of the subframe, whereas the PUCCH is allocated to both ends of a data region in the frequency domain. The control information transmitted on the PUCCH includes an ACK/NACK, a channel quality indicator (CQI) representing a downlink channel state, an RI for Multiple Input and Multiple Output (MIMO), a scheduling request (SR) indicating a request for allocation of UL resources, etc. A PUCCH of a UE uses one RB occupying different frequencies in each slot of a subframe.

That is, two RBs allocated to the PUCCH frequency-hop over the slot boundary. Particularly, PUCCHs for m=0, m=1, m=2, and m=3 are allocated to a subframe in FIG. 5.

And, time capable of transmitting a sounding reference signal in a subframe corresponds to a symbol period lastly positioned in a subframe in a time axis and the sounding reference signal is transmitted through a data transmission band in frequency axis. Sounding reference signals of a plurality of UEs transmitted through a last symbol of an identical subframe can be distinguished from each other according to a frequency position.

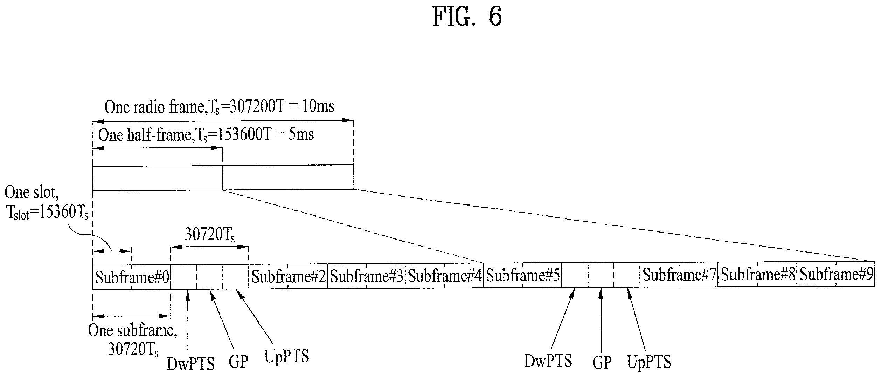

FIG. 6 illustrates a structure of a radio frame in an LTE TDD system. In the LTE TDD system, a radio frame includes two half frames, and each half frame includes four normal subframes each including two slots, and a special subframe including a downlink pilot time slot (DwPTS), a guard period (GP), and an uplink pilot time slot (UpPTS).

In the special subframe, the DwPTS is used for initial cell search, synchronization, or channel estimation in a UE. The UpPTS is used for channel estimation in an eNB and uplink transmission synchronization of a UE. That is, the DwPTS is used for downlink transmission and the UpPTS is used for uplink transmission. In particular, the UpPTS is used for transmission of a PRACH preamble or SRS. In addition, the GP is a period for removing interference generated in uplink due to multipath delay of a downlink signal between uplink and downlink.

Meanwhile, in an LTE TDD system, a UL/DL configuration is shown in Table 1 below.

[Table 1]

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In Table 1 above, D, U, and S refer to a downlink subframe, an uplink subframe, and the special subframe. In addition, Table 1 also shows downlink-to-uplink switch-point periodicity in an uplink/downlink subframe configuration in each system.

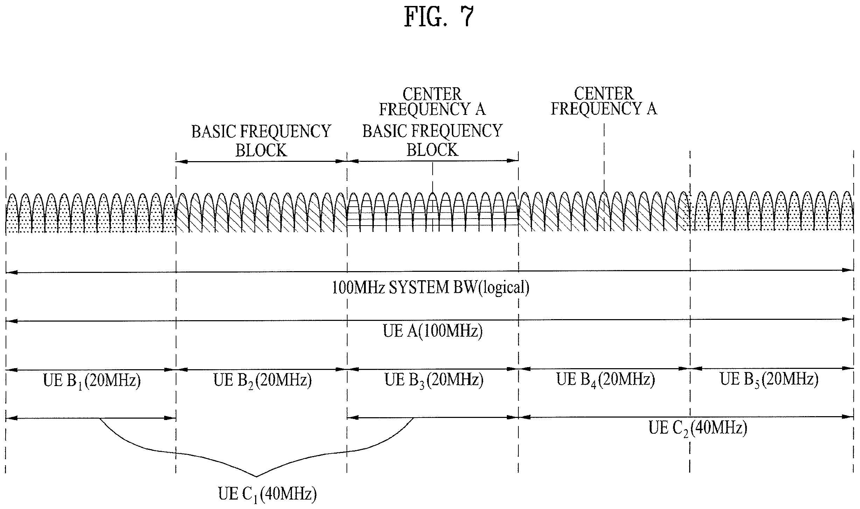

Hereinafter, a carrier aggregation scheme will be described. FIG. 7 is a view illustrating concept of a carrier aggregation scheme.

The carrier aggregation refers to a method of using a plurality of frequency blocks or (logical) cells including uplink resources (or component carriers) and/or downlink resources (or component carriers) by a UE as one large logical frequency band in order to use a wider frequency band by a wireless communication system. Hereinafter, for convenience of description, the term 'component carrier' will consistently used.

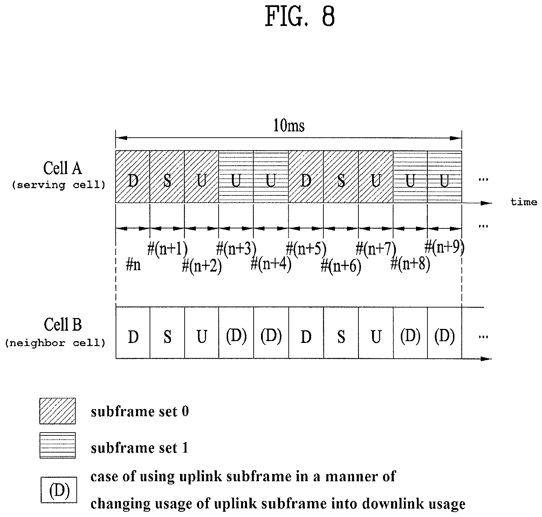

Referring to FIG. 7, a system bandwidth (system BW) has a maximum of 100 MHz as a logical bandwidth. The system BW includes five component carriers. Each component carrier has a maximum of 20 MHz of bandwidth. A component carrier includes one or more physically consecutive subcarriers. Although FIG. 7 illustrates the case in which component carriers have the same bandwidth, the case is purely exemplary, and thus, the component carriers may have different bandwidths. In addition, although FIG. 7 illustrates the case in which the component carriers are adjacent to each other in the frequency domain, FIG. 8 are logically illustrated, and thus, the component carriers may be physically adjacent to each other or may be spaced apart from each other.

Component carriers can use different center frequencies or use one common center frequency with respect to physically adjacent component carriers. For example, in FIG. 8, assuming all component carriers are physically adjacent to each other, center frequency A may be used. In addition, assuming that component carriers are not physically adjacent to each other, center frequency A, center frequency B, etc. may be used with respect to the respective component carriers.

Throughout this specification, a component carrier may correspond to a system band of a legacy system. The component carrier is defined based on a legacy system, and thus, it can be easy to provide backward compatibility and to design the system in a wireless communication environment in which an evolved UE and a legacy UE coexist. For example, when an LTE-A system supports carrier aggregation, each component carrier may corresponds to a system band of an LTE system. In this case, the component carrier may have any one of bandwidths of 1.25, 2.5, 5, 10, and 20 Mhz.

When a system band is extended via carrier aggregation, a frequency band used for communication with each UE is defined in a component carrier unit. UE A may use 100 MHz as a system band and perform communication using all five component carriers. UEs $B_1$ to $B_5$ can use only a bandwidth of 20 MHz and perform communication using one component carrier. UEs $C_1$ and $C_2$ can use a bandwidth of 40 MHz and communication using two component carries. The two component carriers may or may not be logically/physically adjacent to each other. UE $C_1$ refers to the case in which two component carriers that are not adjacent to each other are used and UE $C_2$ refers to the case in which two adjacent component carriers are used.

An LTE system may use one downlink component carrier and one uplink component carrier, whereas an LTE-A system may use a plurality of component carriers as illustrated in FIG. 7. In this case, a method for scheduling a data channel by a control channel may be classified into a linked carrier scheduling method and a cross carrier scheduling method.

In more detail, in the linked carrier scheduling method, a control channel transmitted through a specific component carrier schedules only a data channel through the specific component carrier like in a legacy LTE system using a single component carrier.

Meanwhile, in the cross carrier scheduling method, a control channel transmitted through a primary component carrier (primary CC) using a carrier indicator field (CIF) schedules a data channel transmitted through a data channel transmitted through the primary CC or a secondary CC.

A description will be given of a method for controlling uplink transmission power in an LTE system.

A method for controlling, by a UE, uplink transmission power thereof includes open loop power control (OLPC) and closed loop power control (CLPC). The former controls power in such a manner that attenuation of a downlink signal from a base station of a cell to which a UE belongs is estimated and compensated for. OLPC controls uplink power by increasing uplink transmission power when downlink signal attenuation increases as a distance between the UE and the base station increases. The latter controls uplink power in such a manner that the base station directly transmits information (i.e. a control signal) necessary to control uplink transmission power.

The following equation 1 is used to determine transmission power of a UE when a serving cell $c$ transmits only a PUSCH instead of simultaneously transmitting the PUSCH and a PUCCH in a subframe corresponding to a subframe index $i$ in a system that supports carrier aggregation.

[Equation 1]

$$P_{\text{PUSCH,c}}(i) = \min\left\{ \begin{array}{l} P_{\text{CMAX},c}(i), \\ 10\log_{10}(M_{\text{PUSCH,c}}(i)) + P_{\text{O\_PUSCH,c}}(j) + \alpha_c(j) \cdot PL_c + \Delta_{\text{TF,c}}(i) + f_c(i) \end{array} \right\}[dBm]$$

The following equation 2 is used to determine PUSCH transmission power when the serving cell $c$ simultaneously transmits the PUCCH and the PUSCH in the subframe corresponding to the subframe index $i$ in a system supporting carrier aggregation.

[Equation 2]

$$P_{\text{PUSCH,c}}(i) = \min\left\{ \begin{array}{l} 10\log_{10}\left(\hat{P}_{\text{CMAX},c}(i) - \hat{P}_{\text{PUCCH}}(i)\right), \\ 10\log_{10}(M_{\text{PUSCH,c}}(i)) + P_{\text{O\_PUSCH,c}}(j) + \alpha_c(j) \cdot PL_c + \Delta_{\text{TF,c}}(i) + f_c(i) \end{array} \right\}[dBm]$$

Parameters, which will be described in association with Equations 1 and 2, determine uplink transmission power of a UE in the serving cell $c$. Here, $P_{\text{CMAX},c}(i)$ in Equation 1 indicates maximum transmittable power of the UE in the subframe corresponding to the subframe index $i$ and $\hat{P}_{\text{CMAX},c}(i)$ in Equation 2 indicates a linear value of $P_{\text{CMAX},c}(i)$. $\hat{P}_{\text{PUCCH}}(i)$ in Equation 2 indicates a linear value of $P_{\text{PUCCH}}(i)$ ($P_{\text{PUCCH}}(i)$ indicating PUCCH transmission power in the subframe corresponding to subframe index $i$).

In Equation 1, $M_{\text{PUSCH,c}}(i)$ is a parameter indicating a PUSCH resource allocation bandwidth, which is represented as the number of resource blocks valid for the subframe index $i$, and is allocated by a base station. $P_{\text{O\_PUSCH,c}}(j)$ is a parameter corresponding to the sum of a cell-specific nominal component $P_{\text{O\_NOMINAL\_PUSCH,c}}(j)$ provided by a higher layer and a UE-specific component $P_{\text{O\_UE\_PUSCH,c}}(j)$ provided by the higher layer and is signaled to the UE by the base station.

$j$ is 1 in PUSCH transmission/retransmission according to an uplink grant and $j$ is 2 in PUSCH transmission/retransmission according to a random access response. In addition, $P_{\text{O\_UE\_PUSCH,c}}(2) = 0$ and $P_{\text{O\_NOMINAL\_PUSCH,c}}(2) = P_{\text{O\_PRE}} + \Delta_{\text{PREAMBLE\_Msg3}}$. Parameters $P_{\text{O\_PRE}}$ and $\Delta_{\text{PREAMBLE\_Msg3}}$ are signaled by the higher layer.

$\alpha_c(j)$ is a pathloss compensation factor and a cell-specific parameter provided by the higher layer and transmitted as 3 bits by the base station. $\alpha \in \{0, 0.4, 0.5, 0.6, 0.7, 0.8, 0.9, 1\}$ when $j$ is 0 or 1 and $\alpha_c(j) = 1$ when $j$ is 2. $\alpha_c(j)$ is a value signaled to the UE by the base station.

Pathloss $PL_c$ is a downlink pathloss (or signal loss) estimate value in dBs, calculated by the UE, and is represented as $PL_c$=referenceSignalPower - higher layer filteredRSRP. Here, referenceSignalPower can be signaled to the UE by the base station via the higher layer.

$f_c(i)$ is a value indicating current PUSCH power control adjustment state for the subframe index $i$ and can be represented as a current absolute value or accumulated value. When accumulation is enabled on the basis of a parameter provided by the higher layer or a TPC command $\delta_{PUSCH,c}$ is included in a PDCCH along with DCI format 0 for the serving cell $c$ in which CRC is scrambled with temporary C-RNTI, $f_c(i)=f_c(i-1)+\delta_{PUSCH,c}(i-K_{PUSCH})$ is satisfied. $\delta_{PUSCH,c}(i-K_{PUSCH})$ is signaled through the PDCCH with DCI format 0/4 or 3/3A in a subframe $i-K_{PUSCH}$. Here, $f_c(0)$ is the first value after reset of the accumulated value.

$K_{PUSCH}$ is defined in LTE as follows.

For FDD (Frequency Division Duplex), $K_{PUSCH}$ has a value of 4. As to TDD, $K_{PUSCH}$ has values as shown in Table 2.

[Table 2]

| TDD UL/DL Configuration | subframe number $i$ | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | 7 | 4 | - | - | 6 | 7 | 4 |
| 1 | - | - | 6 | 4 | - | - | - | 6 | 4 | - |
| 2 | - | - | 4 | - | - | - | - | 4 | - | - |
| 3 | - | - | 4 | 4 | 4 | - | - | - | - | - |
| 4 | - | - | 4 | 4 | - | - | - | - | - | - |
| 5 | - | - | 4 | - | - | - | - | - | - | - |
| 6 | - | - | 7 | 7 | 5 | - | - | 7 | 7 | - |

The UE attempts to decode a PDCCH in DCI format 0/4 with C-RNTI thereof or to decode a PDCCH in DCI format 3/3A and a DCI format for SPS C-RNTI with TPC-PUSCH-RNTI thereof in each subframe in cases other than DRX state. When DCI formats 0/4 and 3/3A for the serving cell c are detected in the same subframe, the UE needs to use $\delta_{PUSCH,c}$ provided in DCI format 0/4. When a TPC command decoded for the serving cell c is not present, DRX is generated or a subframe having index $i$ is a subframe other than an uplink subframe in TDD, $\delta_{PUSCH,c}$ is 0 dB.

Accumulated $\delta_{PUSCH,c}$, which is signaled together with DCI format 0/4 on a PDCCH, is shown in Table 3. When a PDCCH with DCI format 0 is validated through SPS activation or released, $\delta_{PUSCH,c}$ is 0dB. Accumulated $\delta_{PUSCH,c}$, which is signaled with DCI format 3/3A on a PDCCH, is one of SET1 of Table 3 or one of SET2 of Table 4, determined by a TPC-index parameter provided by the higher layer.

[Table 3]

| TPC Command Field in DCI format 0/3/4 | Accumulated $\delta_{PUSCH,c}$ [dB] | Absolute $\delta_{PUSCH,c}$ [dB] only DCI format 0/4 |
|---|---|---|
| 0 | -1 | -4 |
| 1 | 0 | -1 |
| 2 | 1 | 1 |
| 3 | 3 | 4 |

[Table 4]

| TPC Command Field in DCI format 3A | Accumulated $\delta_{PUSCH,c}$ [dB] |
|---|---|
| 0 | -1 |

(continued)

| TPC Command Field in DCI format 3A | Accumulated $\delta_{\text{PUSCH,c}}$ [dB] |
|---|---|
| 1 | 1 |

When the UE reaches maximum transmission power $\hat{P}_{CMAX}(i)$ in the serving cell c, a positive TPC command is not accumulated for the serving cell c. Conversely, when the UE reaches minimum transmission power, a negative TPC command is not accumulated.

The following equation 3 is related to uplink power control with respect to a PUCCH in LTE.

[Equation 3]

$$P_{\text{PUCCH}}(i) = \min \begin{cases} P_{\text{CMAX,c}}(i), \\ P_{0\_\text{PUCCH}} + PL_c + h(n_{CQI}, n_{HARQ}, n_{SR}) + \Delta_{\text{F\_PUCCH}}(F) + \Delta_{TxD}(F') + g(i) \end{cases} [dBm]$$

In Equation 3, $i$ indicates a subframe index and $c$ indicates a cell index. When a UE is configured by a higher layer to transmit a PUCCH over through antenna ports, $\Delta_{TxD}(F')$ is provided to the UE by the higher layer. In other cases, $\Delta_{TxD}(F')$ is 0. Parameters with respect to a cell having the cell index $c$ will now be described.

$P_{\text{CMAX,c}}(i)$ indicates maximum transmission power of a UE, $P_{0\_\text{PUCCH}}$ is a parameter corresponding to the sum of cell-specific parameters and signaled by a base station through higher layer signaling, $PL_c$ is a downlink pathloss (or signal loss) estimate value calculated in dBs by the UE and is represented as $PL_c$=referenceSignalPower - higher layer filteredRSRP. $h(n)$ is a value depending on PUCCH format, $n_{CQI}$ is the number of information bits with respect to channel quality information (CQI) and $n_{HARQ}$ indicates the number of HARQ bits. In addition, $\Delta_{\text{F\_PUCCH}}(F)$ is a relative value with respect to PUCCH format la and a value corresponding to PUCCH format #F, which is signaled by the base station through higher layer signaling. $g(i)$ indicates a current PUCCH power control adjustment state of a subframe having index $i$.

$g(0)=0$ when $P_{\text{O\_UE\_PUCCH}}$ is changed in the higher layer and $g(0)=\Delta P_{rampup}+\delta_{msg2}$ otherwise. $\delta_{msg2}$ is a TPC command indicated in a random access response $\Delta P_{rampup}$ corresponds to total power ramp-up from the first to last preambles, provided by the higher layer.

When a UE reaches maximum transmission power $P_{\text{CMAX,c}}(i)$ in a primary cell, a positive TPC command is not accumulated for the primary cell. When the UE reaches minimum transmission power, a negative TPC command is not accumulated. The UE resets accumulation when $P_{\text{O\_UE\_PUCCH}}$ is changed by the higher layer or upon reception of a random access response.

Tables 5 and 6 show $\delta_{\text{PUCCH}}$ indicated by a TPC command in DCI formats. Particularly, Table 5 shows $\delta_{\text{PUCCH}}$ indicated in DCI formats other than DCI format 3A and Table 6 shows $\delta_{\text{PUCCH}}$ indicated in DCI format 3A.

[Table 5]

| TPC Command Field in DCI format 1A/1B/1D/1/2A/2B/2C/2D/2/3 | $\delta_{\text{PUCCH}}$ [dB] |
|---|---|
| 0 | -1 |
| 1 | 0 |
| 2 | 1 |
| 3 | 3 |

[Table 6]

| TPC Command Field in DCI format 3A | $\delta_{\text{PUCCH}}$ [dB] |
|---|---|
| 0 | -1 |
| 1 | 1 |

Equation 4 in the following corresponds to an equation related to power control of a sounding reference signal (SRS) in LTE system.

[Equation 4]

$$P_{\text{SRS,c}}(i) = \min \left\{ \begin{array}{l} P_{\text{CMAX,c}}(i) \\ P_{\text{SRS\_OFFSET,c}}(m) + 10\log_{10}(M_{\text{SRS,c}}) + P_{\text{O\_PUSCH,c}}(j) + \alpha_c(j) \cdot PL_c + f_c(i) \end{array} \right\} [dBm]$$

In Equation 4, i corresponds to a subframe index and c corresponds to a cell index. In this case, $P_{\text{CMAX,c}}(i)$ corresponds to maximum power capable of being transmitted by a UE and $P_{\text{SRS\_OFFSET,c}}(m)$ corresponds to a value configured by an upper layer. If m is 0, it may correspond to a case of transmitting a periodic sounding reference signal. If m is not 0, it may correspond to a case of transmitting an aperiodic sounding reference signal. $M_{\text{SRS,c}}$ corresponds to a sounding reference signal bandwidth on a subframe index i of a serving cell c and is represented by the number of resource blocks.

$f_c(i)$ corresponds to a value indicating a current PUSCH power control adjustment status for a subframe index i of a serving cell c. $P_{\text{O\_PUSCH,c}}(j)$ and $\alpha_c(j)$ are also identical to what is mentioned earlier in Equation 1 and 2.

Hereinafter, a Sounding Reference Signal (SRS) will be described.

The SRS is composed of constant amplitude zero auto correlation (CAZAC) sequences. SRSs transmitted from several UEs are CAZAC sequences $r^{\text{SRS}}(n) = r_{u,v}^{(\alpha)}(n)$ having different cyclic shift values $\alpha$ according to Equation 1.

[Equation 1]

$$\alpha = 2\pi \frac{n_{\text{SRS}}^{\text{cs}}}{8}$$

where, $n_{\text{SRS}}^{\text{cs}}$ is a value set to each UE by a higher layer and has an integer value of 0 to 7. Accordingly, the cyclic shift value may have eight values according to $n_{\text{SRS}}^{\text{cs}}$.

CAZAC sequences generated from one CAZAC sequence through cyclic shift have zero correlation values with sequences having different cyclic shift values. Using such property, SRSs of the same frequency domain may be divided according to CAZAC sequence cyclic shift values. The SRS of each UE is allocated onto the frequency axis according to a parameter set by the eNB. The UE performs frequency hopping of the SRS so as to transmit the SRS with an overall uplink data transmission bandwidth.

Hereinafter, a detailed method of mapping physical resources for transmitting SRSs in an LTE system will be described.

In order to satisfy transmit power $P_{\text{SRS}}$ of a UE, an SRS sequence $r^{\text{SRS}}(n)$ is first multiplied by an amplitude scaling factor $\beta_{\text{SRS}}$ and is then mapped to a resource element (RE) having an index (k, 1) from $r^{\text{SRS}}(0)$ by Equation 6.

[Equation 6]

$$a_{2k+k_0,l} = \begin{cases} \beta_{\text{SRS}} r^{\text{SRS}}(k) & k = 0,1,...,M_{\text{sc},b}^{\text{RS}} - 1 \\ 0 & \text{otherwise} \end{cases}$$

where, $k_0$ denotes a frequency domain start point of an SRS and is defined by Equation 7.

[Equation 7]

$$k_0 = k_0' + \sum_{b=0}^{B_{\text{SRS}}} 2M_{\text{sc},b}^{\text{RS}} n_b$$

where, $n_b$ denotes a frequency location index. $k_0'$ for a general uplink subframe is defined by Equation 8 and $k_0'$ for an uplink pilot time is defined by Equation 9.

[Equation 8]

$$k_0' = \left(\left\lfloor N_{RB}^{UL}/2 \right\rfloor - m_{SRS,0}/2\right) N_{SC}^{RB} + k_{TC}$$

[Equation 9]

$$k_0' = \begin{cases} (N_{RB}^{UL} - m_{SRS,0}^{max}) N_{sc}^{RB} + k_{TC} & \text{if } \left((n_f \bmod 2) \times (2 - N_{SP}) + n_{hf}\right) \bmod 2 = 0 \\ k_{TC} & \text{otherwise} \end{cases}$$

In Equations 4 and 5, $k_{TC}$ denotes a transmissionComb parameter signaled to a UE via a higher layer and has a value of 0 or 1. In addition, $n_{hf}$ is 0 in an uplink pilot time slot of a first half frame and is 0 an uplink pilot slot of a second half frame. $M_{sc,b}^{RS}$ is the length, that is, the bandwidth, if the SRS sequence expressed in subcarrier units defined by Equation 10.

[Equation 10]

$$M_{sc,b}^{RS} = m_{SRS,b} N_{sc}^{RB}/2$$

In Equation 10, $m_{SRS,b}$ is a value signaled from an eNB according to an uplink bandwidth $N_{RB}^{UL}$.

The UE may perform frequency hopping of the SRS so as to transmit the SRS with the overall uplink data transmission bandwidth. Such frequency hopping is set by a parameter $b_{hop}$ having a value of 0 to 3 received from a higher layer.

If frequency hopping of the SRS is inactivated, that is, if $b_{hop} \geq B_{SRS}$, a frequency location index $n_b$ has a constant value as shown in Equation 11. Here, $n_{RRC}$ is a parameter received from a higher layer.

[Equation 11]

$$n_b = \left\lfloor 4n_{RRC}/m_{SRS,b} \right\rfloor \bmod N_b$$

Meanwhile, if frequency hopping of the SRS is activated, that is, $b_{hop} < B_{SRS}$, a frequency location index $n_b$ is defined by Equations 12 and 13.

[Equation 12]

$$n_b = \begin{cases} \left\lfloor 4n_{RRC}/m_{SRS,b} \right\rfloor \bmod N_b & b \leq b_{hop} \\ \left\{F_b(n_{SRS}) + \left\lfloor 4n_{RRC}/m_{SRS,b} \right\rfloor\right\} \bmod N_b & \text{otherwise} \end{cases}$$

[Equation 13]

$$F_b(n_{SRS}) = \begin{cases} (N_b/2)\left\lfloor \dfrac{n_{SRS} \bmod \Pi_{b'=b_{hop}}^{b} N_{b'}}{\Pi_{b'=b_{hop}}^{b-1} N_{b'}} \right\rfloor + \left\lfloor \dfrac{n_{SRS} \bmod \Pi_{b'=b_{hop}}^{b} N_{b'}}{2\Pi_{b'=b_{hop}}^{b-1} N_{b'}} \right\rfloor & \text{if } N_b \text{ even} \\ \left\lfloor N_b/2 \right\rfloor \left\lfloor n_{SRS}/\Pi_{b'=b_{hop}}^{b-1} N_{b'} \right\rfloor & \text{if } N_b \text{ odd} \end{cases}$$

where, $n_{SRS}$ is a parameter used to calculate the number of times of transmitting the SRS and is defined by Equation 14.

[Equation 14]

$$n_{\text{SRS}} = \begin{cases} \left\lfloor 2N_{SP}n_f + 2(N_{SP}-1)\left\lfloor \dfrac{n_s}{10} \right\rfloor + \left\lfloor \dfrac{T_{offset}}{T_{offset\_\max}} \right\rfloor \right\rfloor, & \text{for 2ms SRS periodicity of TDD frame structure} \\ \left\lfloor (n_f \times 10 + \left\lfloor n_s/2 \right\rfloor)/T_{SRS} \right\rfloor & \text{otherwise} \end{cases}$$

In Equation 14, $T_{SRS}$ denotes the periodicity of an SRS and $T_{offset}$ denotes a subframe offset of an SRS. In addition, $n_s$ denotes a slot number and $n_f$ denotes a frame number.

A UE-specific SRS configuration index $I_{SRS}$ for setting the periodicity $T_{SRS}$ and the subframe offset $T_{offset}$ of a UE-specific SRS signal is shown in Table 7 - Table 10 according to FDD and TDD. In particular, Table 7 and Table 8 indicate a FDD system and a TDD system, respectively. Table 7 and Table 8 in the following show a period related to a triggering type 0, i.e., a periodic SRS, and offset information.

[Table 7]

| SRS Configuration Index $I_{SRS}$ | SRS Periodicity $T_{SRS}$ (ms) | SRS Subframe Offset $T_{offset}$ |
|---|---|---|
| 0 - 1 | 2 | $I_{SRS}$ |
| 2 - 6 | 5 | $I_{SRS}$ - 2 |
| 7 - 16 | 10 | $I_{SRS}$ - 7 |
| 17 - 36 | 20 | $I_{SRS}$ - 17 |
| 37 - 76 | 40 | $I_{SRS}$ - 37 |
| 77 - 156 | 80 | $I_{SRS}$ - 77 |
| 157 - 316 | 160 | $I_{SRS}$ - 157 |
| 317 - 636 | 320 | $I_{SRS}$-317 |
| 637 - 1023 | reserved | reserved |

[Table 8]

| SRS Configuration Index $I_{SRS}$ | SRS Periodicity $T_{SRS}$ (ms) | SRS Subframe Offset $T_{offset}$ |
|---|---|---|
| 0 - 1 | 2 | $I_{SRS}$ |
| 2 - 6 | 5 | $I_{SRS}$ - 2 |
| 7 - 16 | 10 | $I_{SRS}$ - 7 |
| 17 - 36 | 20 | $I_{SRS}$ - 17 |
| 37 - 76 | 40 | $I_{SRS}$ - 37 |
| 77 - 156 | 80 | $I_{SRS}$-77 |
| 157 - 316 | 160 | $I_{SRS}$ - 157 |
| 317 - 636 | 320 | $I_{SRS}$-317 |
| 637 - 1023 | reserved | reserved |

Meanwhile, in case of the periodic SRS, transmission is performed in a subframe satisfying Equation 15 in the following in a FDD system or a TDD system where $T_{SRS}$ is greater than 2 ($T_{SRS} > 2$). Yet, in Equation 15, $k_{SRS}$ corresponds to {0, 1, ..., 9} in case of the FDD system, whereas $k_{SRS}$ is determined according to Table 9 in the following in case of the TDD system.

[Equation 15]

$$(10 \cdot n_f + k_{\mathrm{SRS}} - T_{\mathit{offset}}) \bmod T_{\mathrm{SRS}} = 0$$

[Table 9]

| | subframe index $n$ | | | | | | | | | | | |
|---|---|---|---|---|---|---|---|---|---|---|---|---|
| | 0 | 1 | | 2 | 3 | 4 | 5 | 6 | | 7 | 8 | 9 |
| | | 1st symbol of UpPTS | 2nd symbol of UpPTS | | | | | 1st symbol of UpPTS | 2nd symbol of UpPTS | | | |
| $k_{\mathrm{SRS}}$ in case UpPTS length of 2 symbols | | 0 | 1 | 2 | 3 | 4 | | 5 | 6 | 7 | 8 | 9 |
| $k_{\mathrm{SRS}}$ in case UpPTS length of 1 symbol | | 1 | | 2 | 3 | 4 | | 6 | | 7 | 8 | 9 |

And, in case of a TDD system where $T_{\mathrm{SRS}}$ corresponds to 2 in Table 8, transmission is performed in a subframe satisfying Equation 16 in the following.

[Equation 16]

$$(k_{\mathrm{SRS}} - T_{\mathit{offset}}) \bmod 5 = 0$$

Table 10 and Table 11 in the following show a period related to a triggering type 1, i.e., an aperiodic SRS, and offset information. In particular, Table 10 and Table 11 indicate a FDD system and a TDD system, respectively.

[Table 10]

| SRS Configuration Index $I_{\mathrm{SRS}}$ | SRS Periodicity $T_{\mathrm{SRS},1}$ (ms) | SRS Subframe Offset $T_{\mathit{offset},1}$ |
|---|---|---|
| 0 - 1 | 2 | $I_{\mathrm{SRS}}$ |
| 2 - 6 | 5 | $I_{\mathrm{SRS}}$ - 2 |
| 7 - 16 | 10 | $I_{\mathrm{SRS}}$ - 7 |
| 17 - 31 | reserved | reserved |

[Table 11]

| SRS Configuration Index $I_{\mathrm{SRS}}$ | SRS Periodicity $T_{\mathrm{SRS},1}$ (ms) | SRS Subframe Offset $T_{\mathit{offset},1}$ |
|---|---|---|
| 0 | 2 | 0, 1 |
| 1 | 2 | 0,2 |
| 2 | 2 | 1,2 |
| 3 | 2 | 0,3 |
| 4 | 2 | 1,3 |
| 5 | 2 | 0,4 |
| 6 | 2 | 1,4 |
| 7 | 2 | 2,3 |

(continued)

| SRS Configuration Index $I_{SRS}$ | SRS Periodicity $T_{SRS,1}$ (ms) | SRS Subframe Offset $T_{offset,1}$ |
|---|---|---|
| 8 | 2 | 2,4 |
| 9 | 2 | 3,4 |
| 10 - 14 | 5 | $I_{SRS}$ - 10 |
| 15 - 24 | 10 | $I_{SRS}$ - 15 |
| 25 - 31 | reserved | reserved |

Meanwhile, if a triggering bit of the aperiodic SRS is detected in a subframe #n, an aperiodic SRS corresponding to the triggering bit is transmitted in a first subframe satisfying Equation 17 or Equation 18 in the following appearing after a subframe index #n+k (where k ≥ 4). In particular, Equation 17 in the following is used for a FDD system or a TDD system of which $T_{SRS}$ is greater than 2 ($T_{SRS}$ > 2) in the Table 11. Equation 18 in the following is used for a TDD system of which $T_{SRS}$ is equal to 2 ($T_{SRS}$ = 2) in the Table 11. Yet, in case of the FDD system, $k_{SRS}$ corresponds to {0, 1, ..., 9}. In case of the TDD system, $k_{SRS}$ is determined according to the Table 9.

[Equation 17]

$$(10 \cdot n_f + k_{SRS} - T_{offset,1}) \bmod T_{SRS,1} = 0$$

[Equation 18]

$$(k_{SRS} - T_{offset,1}) \bmod 5 = 0$$

When an eNB performs a duplex operation in a manner of dividing total available resources into a downlink resource and an uplink resource, discussion on a technology for more flexibly changing an operation of selecting a usage of each resource from among the downlink resource and the uplink resource is in progress in a recent wireless communication system.

The dynamic resource usage change has a merit capable of performing optimized resource distribution at any timing in a situation that a downlink traffic size and an uplink traffic size are dynamically changing. For example, when a FDD system manages a frequency band in a manner of dividing the frequency band into a downlink band and an uplink band, in order to perform the dynamic resource usage change, an eNB can designate whether a specific band corresponds to a downlink resource or an uplink resource at specific timing through RRC, a MAC layer or a physical layer signal.

In particular, a TDD system divides all subframes into uplink subframes and downlink subframes and uses the uplink subframes and the downlink subframes for uplink transmission of a UE and downlink transmission of an eNB, respectively. In general, this kind of resource division can be provided as a part of system information according to uplink/downlink subframe configuration shown in the Table 1. Of course, it is able to additionally provide a new uplink/downlink subframe configuration rather than the uplink/downlink subframe configuration shown in the Table 1. In order to perform dynamic resource usage change in a TDD system, an eNB can designate whether a specific subframe corresponds to a downlink resource or an uplink resource at specific timing through RRC, a MAC layer or a physical layer signal.

In a legacy LTE system, a downlink resource and an uplink resource are designated via system information. In this case, since the system information corresponds to information to be transmitted to a plurality of unspecified UEs, if the system information is dynamically changed, a problem may occur on operations of legacy UEs. Hence, it is preferable to deliver information on the dynamic resource usage change to UEs maintaining a connection with a current eNB via a new signaling, i.e., a UE-specific signaling, instead of the system information. The new signaling may also indicate a configuration of a dynamically changed resource, for example, uplink/downlink subframe configuration information different from configuration information indicated by the system information in a TDD system.

In addition, the new signaling can include information related to HARQ. In particular, if HARQ timing, which is defined by a scheduling message, PDSCH/PUSCH transmission timing corresponding to the scheduling message and HARQ-ACK transmission timing corresponding to the scheduling message, is dynamically changed, the new signaling can include HARQ timing configuration information capable of maintaining stable HARQ timing although a resource configuration is dynamically changed to solve a problem that HARQ timing is not continuous between timings of changing HARQ. In case of a TDD system, the HARQ timing configuration information can be appeared as an uplink/downlink subframe configuration capable of being referred when downlink HAQR timing and/or uplink HARQ timing is defined.

According to the foregoing description, having accessed a system in which a resource usage is dynamically changing, a UE receives various informations on a resource configuration. In particular, in case of a TDD system, a UE can obtain information described in the following at specific timing.

1) Uplink/downlink subframe configuration which is indicated by system information

2) Uplink/downlink subframe configuration which is delivered to indicate a usage of each subframe via separate signaling

3) Downlink HARQ timing, in particular, uplink/downlink subframe configuration which is delivered to define timing of transmitting HARQ-ACK in response to PDSCH received at specific timing

4) Uplink HARQ timing, in particular, uplink/downlink subframe configuration which is delivered to define timing of transmitting PUSCH in response to an uplink grant received at specific timing and timing of receiving PHICH in response to PUSCH transmitted at specific timing

If a specific UE accesses an eNB configured to dynamically change a resource usage, the eNB mostly operates to designate an uplink/downlink subframe configuration including more uplink subframes via system information if possible. This is because there is a limitation on dynamically changing a subframe configured as a downlink subframe in the system information into an uplink subframe. For example, since legacy UEs always expect and measure transmission of a CRS in a subframe regulated as a downlink subframe via the system information, if the subframe is dynamically changed into an uplink subframe, a significant error may occur in measuring a CRS measured by the legacy UE. Hence, an eNB configures uplink subframes as many as possible via the system information. And, if downlink traffic increases, it is preferable to manage the downlink traffic in a manner of dynamically changing a part of the uplink subframes into a downlink subframe.

In a TDD system operating based on the aforementioned principle, although an uplink/downlink subframe configuration #0 is indicated to a UE at specific timing via the system information, a resource usage can be indicated to be an uplink/downlink subframe configuration #1 in each subframe.

And, a criterion for downlink HARQ timing may become an uplink/downlink subframe configuration #2. This is because, if an uplink/downlink subframe configuration including less uplink subframe and many downlink subframes becomes the criterion for the downlink HARQ timing, if a situation that it is difficult to transmit HARQ-ACK due to the maximum downlink subframes is made and if the downlink HARQ timing is managed in accordance with the situation, HARQ timing can be lasted although the uplink/downlink subframe configuration is dynamically changed. Similarly, a criterion for uplink HARQ timing may become an uplink/downlink subframe configuration including many uplink subframes such as the uplink/downlink subframe configuration #0.

Meanwhile, as mentioned in the foregoing description, uplink transmit power control of a UE includes an OLPC (open loop power control) parameter and a CLPC (closed loop power control) parameter. The OLCP parameter corresponds to a factor for controlling power in a manner of estimating diminution of a downlink signal from a base station of a cell to which the UE belongs thereto and compensating the diminution. For example, if the diminution of the downlink signal increases as a distance between the UE and a base station connected with the UE is getting longer, uplink power is controlled in a manner of increasing transmit power of uplink. The CLPC parameter controls the uplink power in a manner that the base station directly delivers information (e.g., a control signal) necessary for controlling the uplink transmit power.

Yet, the aforementioned legacy methods of controlling uplink power do not consider such a case as a UE, which has accessed an eNB configured to dynamically change a resource usage. If specific uplink transmission is performed in an uplink subframe to which the dynamic resource usage change is applied and the legacy power control scheme is applied as it is, it may cause severe uplink transmission capability deterioration due to such a reason as considerably changing interference environment changed by downlink transmission of a neighbor cell.

For this reason, discussion on a scheme of designating a plurality of subframe sets and applying a different power control scheme according to each of a plurality of the subframe sets are in progress in a recent LTE system. Information on a plurality of the subframe sets can be provided to a UE through a higher layer signal such as RRC and the like. In particular, the information can be provided to the UE in a manner of being interlocked with information on a subframe set used for a different usage or can be independently RRC signaled.

In the following description, for clarity, assume a situation that two subframe sets are signaled in total. In this case, the two subframe sets are referred to as a subframe set #1 and a subframe set #2, respectively. Each of the subframe set #1 and the subframe set #2 can be defined by a subframe bitmap form of a size of specific L bits. In particular, the subframe set #1 and the subframe set #2 may correspond to a static subframe (static SF) and a flexible subframe (flexible SF), respectively.

FIG. 8 is a diagram for an example of dividing a radio frame into a subframe set #1 and a subframe set #2.

Referring to FIG. 8, a static subframe may correspond to legacy subframe to which a dynamic resource usage change is not applied. And, a flexible subframe may correspond to a subframe to which the dynamic resource usage change is applied or capable of being applied. In particular, unlike the static subframe, since interference environment can be considerably changed in the flexible subframe when a UE performs uplink transmission, it may be preferable to apply a separate power control scheme to the flexible subframe.

In particular, referring to an example of FIG. 8, in a state that both a cell A (serving cell) and a cell B (neighbor cell) configure an uplink/downlink subframe configuration #0 (i.e., DSUUUDSUUU) through system information, the cell B changes a usage of #(n+3), #(n+4), #(n+8) and #(n+9) subframes into downlink subframes.

In this case, as shown in FIG. 8, the cell A sets a subframe set #1 and a subframe set #2 to UE(s) belonging to the cell A and may be able to apply a different power control scheme according to each subframe set. In particular, if inter-cell cooperation is available, neighbor cells are able to appropriately configure subframe sets in consideration of the inter-cell cooperation when a specific cell applies a dynamic resource usage change. Or, if it is regulated as the prescribed subframe set configurations are applied only between cells in advance, the dynamic resource usage change can be applied to a specific subframe set (e.g., a subframe set #2 in FIG. 8) only.

Specifically, if legacy PUSCH PC in a specific subframe set (e.g., a subframe set #2 which is a flexible subframe) is applied to a different specific subframe set (e.g., a subframe set #1 which is a static subframe) as it is, performance degradation may occur due to a big interference environment difference according to a subframe set. Hence, it is preferable to apply a PUSCH power control process which is separated from each other according to each subframe set.

Similar to a case of setting a plurality of the PUSCH power control processes to a specific UE, a method of setting a plurality of SRS power control processes is proposed. In particular, it is able to configure an interworking relationship between a specific SRS power control process and a specific PUSCH power control process.

For example, it is able to configure a corresponding relationship such that a PUSCH power control process #1 is interlocked with an SRS power control process #1 and a PUSCH power control process #2 can be interlocked with an SRS power control process #2, and the like. In this case, a meaning of the interworking may indicate that at least one parameter among parameters $\{P_{CMAX,c}(i), P_{SRS\_OFFSET,c}(m), M_{SRS,c}, P_{O\_PUSCH,c}(j), \alpha_c(j), PL_c, f_c(i)\}$ consisting of an SRS power control process is identical to a corresponding parameter of an interworking PUSCH power control process or the at least one parameter is determined in a manner of being interlocked with a specific function. Specifically, $\{P_{O\_PUSCH,c}(j), \alpha_c(j), PL_c, f_c(i)\}$ can be configured/applied in a manner of being identical to the parameter of the interlocked PUSCH power control process. It is able to configure $P_{SRS\_OFFSET,c}(m)$ with a separate independent value according to each SRS power control process and the $P_{SRS\_OFFSET,c}(m)$ can be configured with a common value between partial SRS power control processes.

As a concrete example, if a triggering message of an A-SRS is received in an $n^{th}$ subframe, the S-SRS is transmitted in an $m^{th}$ subframe. In this case, the A-SRS is transmitted using a power control process applied to a corresponding subframe set according to whether the $m^{th}$ subframe corresponds to a power control subframe set #1 or a power control subframe set #2. In summary, a PUSCH power control process, which is interlocked with a power control subframe set to which the $m^{th}$ subframe belongs thereto, becomes a connection link and it is able to apply an A-SRS power control process interlocked with the PUSCH power control process.

Meanwhile, in case of a special subframe of a TDD system, although the special subframe includes UpPTS for uplink transmission, an SRS can be transmitted in the UpPTS only, whereas PUSCH is not transmitted in the UpPTS. However, according to the present invention, if a subframe in which an actual SRS is transmitted corresponds to a special subframe, a power control parameter for PUSCH exists in the special subframe although it is unable to transmit PUSCH in the special subframe. Hence, a UE can determine transmit power of an SRS using the power control parameter set for the PUSCH.

Current 3GPP standard document defines a configuration of the special subframe as Table 12 in the following. In Table 12, $T_s=1/(15000\times2048)$ indicates DwPTS and UpPTS. And, the remaining region is configured as a guard period. Referring to Table 12, it is able to know that the UpPTS is divided into a case of having a length corresponding 1 symbol and a case of having a length corresponding to 2 symbols. Hence, referring to Table 9, it is able to know that $k_{SRS}$ is differently defined according to each case.

[Table 12]

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | | | $7680 \cdot T_s$ | $4384 \cdot T_s$ | $5120 \cdot T_s$ |
| 5 | $6592 \cdot T_s$ | $4384 \cdot T_s$ | $5120 \cdot T_s$ | $20480 \cdot T_s$ | | |
| 6 | $19760 \cdot T_s$ | | | $23040 \cdot T_s$ | | |
| 7 | $21952 \cdot T_s$ | | | - | - | - |
| 8 | $24144 \cdot T_s$ | | | - | - | - |

In this situation, if $T_{SRS}$ shown in Table 8 is equal to or greater than 5, a subframe in which an SRS is transmitted is determined according to the Equation 15 and the Table 9 for both a case that a length of the UpPTS corresponds to 1 symbol and a case that the length of the UpPTS corresponds to 2 symbols. And, transmit power of the SRS can be determined according to a power control parameter set corresponding to the subframe in which the SRS is transmitted.

Yet, if $T_{SRS}$ corresponds to 2 in the Table 11, it is necessary to define a scheme of determining a transmit power parameter set to be applied according to a $k_{SRS}$ satisfying the Equation 16 and/or whether the length of the UpPTS corresponds to 1 symbol or 2 symbols.

First of all, a case that the length of the UpPTS corresponds to 1 symbol is explained. For example, if $I_{SRS}$ corresponds to 2, 4 and 6, $T_{offset}$ is [1, 2], [1, 3] and [1, 4], respectively. Hence, an SRS should be transmitted in a subframe satisfying the Equation 16. In this case, the SRS is transmitted one in a special subframe and one in a general uplink subframe. Hence, in determining transmit power of the SRS according to a power control parameter set corresponding to a corresponding subframe, there may exist no problem.

Subsequently, a case that the length of the UpPTS corresponds to 2 symbols is explained. For example, if $I_{SRS}$ corresponds to 0, $T_{offset}$ is [0, 1], respectively. Hence, an SRS should be transmitted in a subframe satisfying the Equation 16. In this case, the SRS should be transmitted two times in a special subframe. For clarity, a first UpPTS symbol is referred to as 1-UpPTS and a second UpPTS symbol is referred to as 2-UpPTS. In this case, the special subframe itself may correspond to a prescribed power control parameter set and it may also consider a method of determining transmit power of an SRS according to the power control parameter set for both the 1-UpPTS and the 2-UpPTS.

Yet, the present invention proposes to implement that SRS transmit power respectively transmitted in the 1-UpPTS and the 2-UpPTS are to be interlocked with power control parameter sets different from each other. In particular, if a UE is configured to transmit an SRS two times in an identical subframe, it is able to more precisely know an uplink channel status in a situation that a dynamic usage change occurs in the subframe.

Specifically, if a first power control parameter set is interlocked with the 1-UpPTS and a second power control parameter set is interlocked with the 2-UpPTS, it is able to support more flexible power control. In this case, the first power control parameter set may correspond to a static subframe (i.e., a subframe in which a dynamic usage change is not performed) and the second power control parameter set may correspond to a flexible subframe (i.e., a subframe in which a dynamic usage change is performed), by which the present invention may be non-limited.

In other word, a power control parameter set may correspond to each of subframe sets, may additionally correspond to each of UpPTS symbols and can be signaled by subframe bitmap information. For example, if a power control parameter set is signaled by subframe bitmap information of $T_{ms}$ size, subframes of which specific bits of the subframe bitmap are indicated by 1 correspond to the subframes to which the power control parameter set is applied.

As a more concrete example, if subframe bitmap information is given as [0 0 0 1 1 0 0 0 1 1], since a subframe #0 and a subframe #5 always correspond to downlink subframes, '0' indicated to both the subframe #0 and the subframe #5 is promised to be fixed as '0' all the time. Although a value not '0' is indicated to the subframe #0 and the subframe #5, a UE may consider a corresponding part as '0' all the time or may consider the bitmap itself as an error. And, since a subframe #1 and a subframe #6 (in uplink/downlink subframe configuration 0, 1, 2 and 6) always correspond to special subframes, 0 indicated to the subframe #1 corresponding to a second bit has a meaning more than a subframe to which the power control parameter set is applied. In particular, if this part corresponds to 1, it indicates that the special subframe #1 is also included in the power control parameter set. If this part corresponds to 0, it indicates that the special subframe #1 is excluded from the power control parameter set.

Yet, it is unable to represent indication of a separate power control parameter set according to 1-UpPTS and 2-UpPTS using the aforementioned subframe bitmap only. Hence, in bitmap information such as [1 0 0 1 1 0 0 0 1 1], it is able to define/configure a bit corresponding to a special subframe (e.g., a subframe #2) to indicate a power control parameter set in which 2-UpPTS (or 1-UpPTS) of the special subframe is included and define/configure a bit appearing immediately before the bit corresponding to the special subframe to indicate a power control parameter set in which 1-UpPTS (or 2-UpPTS) of the special subframe is included.

If such bitmap information as [1 0 0 1 1 0 0 0 1 1] is signaled, the first bit 1 is not information on a downlink subframe #1 anymore but information on 1-UpPTS of a special subframe #2. In this case, if an SRS is transmitted in the 1-UpPTS of the special subframe #2, a value of the 1 indicates that transmit power of the SRS should be determined according to a power control parameter set interlocked with the special subframe #2. And, 0 corresponding to a next bit indicates information on 2-UpPTS of the special subframe #2. If an SRS is transmitted in the 2-UpPTS of the special subframe #2, it may indicate that the SRS does not follow the power control parameter set interlocked with the special subframe #2.

In the foregoing description, it is assumed that subframe bitmap information on a first power control parameter set and subframe bitmap information on a second power control parameter set are separately signaled. The subframe bitmap information can also display the subframe bitmap information on the first power control parameter set and the subframe bitmap information on the second power control parameter set at a time. In this case, if a value of a specific bit corresponds to 0, it may indicate the first power control parameter set. If a value of a specific bit corresponds to 1, it may indicate the second power control parameter set.

For example, when such bitmap information as [1 0 0 1 1 0 0 0 1 1] is signaled, if an SRS is transmitted in 1-UpPTS of a special subframe #2, a first bit value 1 indicates that power control of the SRS should be performed based on the second power control parameter set. If an SRS is transmitted in 2-UpPTS of the special subframe #2, a second bit value 2 indicates that power control of the SRS should be performed based on the first power control parameter set. Of course, a specific bit value corresponding to a general uplink subframe #n can indicate a power control parameter set interlocked with the corresponding subframe.

In the following description, when an SRS is transmitted in a special subframe, methods of separately defining/configuring an operation related to power control without interworking the special subframe with a power control parameter set together with a general uplink subframe are proposed.

(1) When an SRS is transmitted in 1-UpPTS of all (or a specific) special subframes, power control should always be performed based on a first power control parameter set. When an SRS is transmitted in 2-UpPTS, power control should always be performed based on a second power control parameter set, and vice versa.

(2) When an SRS is transmitted in 1-UpPTS and/or 2-UpPTS of all (or a specific) special subframes, power control should always be performed based on a predefined power control parameter set. In particular, the predefined power control parameter set may correspond to information commonly applied to the 1-UpPTS and the 2-UpPTS. If the corresponding special subframe corresponds to the 1-UpPTS only, the predefined power control parameter set is interlocked with the 1-UpPTS. For example, the predefined power control parameter set may correspond to a power control parameter set corresponding to a subframe of which a dynamic usage change is unavailable (or a subframe of which a dynamic usage change is available).

(3) It may configure a separate $q^{th}$ power control parameter set (where p = 1 or 2) interworking information according to p-UpPTS (P =1 or 2) of all (or a specific) special subframes. When an SRS is transmitted in the p-UpPTS, power control can be performed based on the separately interlocked $q^{th}$ power control parameter set. The $q^{th}$ power control parameter set is configured irrespective of a control parameter set interlocked according to a general uplink subframe. The $q^{th}$ power control parameter set has a merit in that more flexible signaling possibility is provided to a network.

(4) When an SRS is transmitted in all (or a specific) special subframes, power control should be performed based on a specific power control parameter set interlocked with a general uplink subframe appearing immediately after the special subframe. In particular, when an SRS is transmitted in UpPTS, power control should be performed based on PUSCH transmission power control in a next general uplink subframe. Specifically, if separate power control irrespective of immediately contiguous PUSCH transmit power control is applied to SRS transmit power control in the UpPTS, contiguous uplink transmission having extremely big power difference may occur.

The aforementioned operation may correspond to an operation applied only when a corresponding UE transmits PUSCH to the immediately contiguous general uplink subframe. If the UE does not transmit the PUSCH to the immediately contiguous general uplink subframe, the operation mentioned earlier in (4) may not be applied. In this case, an operation defined/configured by the (1), (2) and (3) can be basically performed.

Or, as mentioned earlier in (4), when continuous uplink transmission occurs, if a UE receives a power control command exceeding a power level maximum difference value, the UE may ignore power control in a corresponding subframe or a symbol (i.e., 1-UpPTS or 2-UpPTS) and maintain a legacy power control level. Or, in case of exceeding the power level maximum difference value, it may be able to define as a power difference exists until the power level maximum difference.

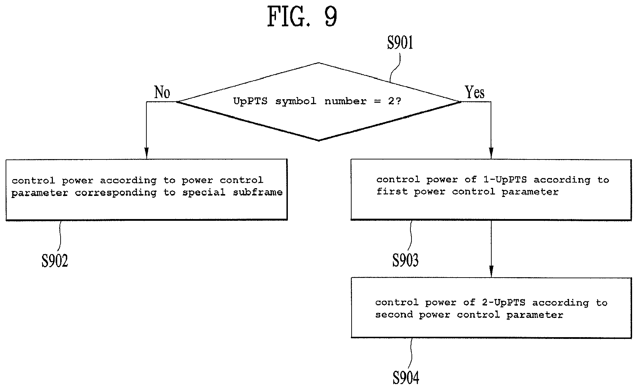

FIG. 9 is a flowchart for an example of performing power control of an SRS in a special subframe according to an embodiment of the present invention.

Referring to FIG. 9, if SRS transmission is scheduled in a special subframe, in the step S901, it is able to check whether or not the number of UpPTS symbols transmitting an SRS in the special subframe corresponds to 2.

If the number of the UpPTS symbols corresponds to 1 instead of 2, in the step S902, transmit power of an SRS can be determined according to a power control parameter set corresponding to the special subframe.

Yet, if the number of UpPTS symbols corresponds to 1, the transmit power of the SRS can be determined according to a first power control parameter in a first UpPTS, i.e., 1-UpPTS of the special subframe in the step S903. And, the transmit power of the SRS can be determined according to a second power control parameter in a second UpPTS, i.e., 2-UpPTS of the special subframe in the step S904. In this case, the first power control parameter set may correspond to a static subframe (i.e., a subframe in which a dynamic usage change is not performed) and the second power control parameter set may correspond to a flexible subframe (i.e., a subframe in which a dynamic usage change is performed), by which the present invention may be non-limited.

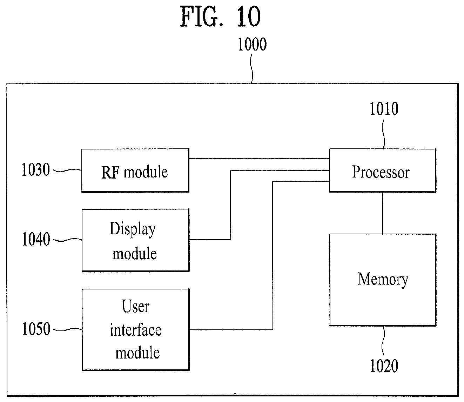

FIG. 10 is a block diagram of a communication apparatus according to an embodiment of the present invention.

Referring to FIG. 10, the communication device 1000 includes a processor 1010, a memory 1020, an RF module 1030, a display module 1040, and a user interface module 1050.

The communication device 1000 is illustrated for convenience of description and some modules may not be omitted. The communication device 1000 may further include necessary modules. In addition, some modules of the communication device 1000 may be subdivided. The processor 1010 is configured to perform operations according to the embodiment of the present invention that is exemplified with reference to the diagrams. In detail, a detailed operation of the processor 1010 would be understood with reference to FIGs. 1 to 9.

The memory 1020 is connected to the processor 1010 and stores an operating system, an application, a program code, data, etc. The RF module 1030 is connected to the processor 1010 and converts a baseband signal into a radio signal or converts a radio signal into a baseband signal. To this end, the RF module 1030 performs analog conversion, amplification, filtering, and frequency up-conversion, or inverse procedures thereof. The display module 1040 is connected to the processor 1010 and displays various pieces of information. The display module 1040 may use, but is not limited to, well-known elements such as a liquid crystal display (LCD), a light emitting diode (LED), and an organic light emitting diode (OLED). The user interface module 1050 may be connected to the processor 1010 and may include a combination of well-known user interfaces such as keypads, touchscreens, etc.

The embodiments of the present invention described above are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present invention or included as a new claim by a subsequent amendment after the application is filed.

The embodiments of the present invention may be achieved by various means, for example, hardware, firmware, software, or a combination thereof. In a hardware configuration, the methods according to exemplary embodiments of the present invention may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, an embodiment of the present invention may be implemented in the form of a module, a procedure, a function, etc. Software code may be stored in a memory unit and executed by a processor. The memory unit is located at the interior or exterior of the processor and may transmit and receive data to and from the processor via various known means.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims module 1050 may be connected to the processor 1010 and may include a combination of well-known user interfaces such as keypads, touchscreens, etc.

The embodiments of the present invention described above are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present invention or included as a new claim by a subsequent amendment after the application is filed.

The embodiments of the present invention may be achieved by various means, for example, hardware, firmware, software, or a combination thereof. In a hardware configuration, the methods according to exemplary embodiments of the present invention may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, an embodiment of the present invention may be implemented in the form of a module, a procedure, a function, etc. Software code may be stored in a memory unit and executed by a processor. The memory unit is located at the interior or exterior of the processor and may transmit and receive data to and from the processor via various known means.

Those skilled in the art will appreciate that the present invention may be carried out in other specific ways than those set forth herein without departing from the essential characteristics of the present invention. The above embodiments are therefore to be construed in all aspects as illustrative and not restrictive. The scope of the invention should be determined by the appended claims

## Claims

1. A method of transmitting a sounding reference signal, SRS, by a user equipment, UE (1000) to a base station, BS, in a time division duplex, TDD, communication system, comprising:

   configuring, through a higher layer, a first power control parameter set for a subframe fixed as an uplink subframe and a second power control parameter set for an uplink subframe capable of being changed to a downlink subframe according to an indication of the BS; and
   transmitting at least one of a first SRS and a second SRS to the BS in a special subframe,
   wherein, if both the first and second SRS are transmitted in the special subframe, a transmit power of the first SRS is determined based on the first power control parameter set and a transmit power of the second SRS is determined based on the second power control parameter set.

2. The method of claim 1, wherein if one of the first and second SRS is transmitted in the special subframe, the transmit power of the SRS is determined based on any one of the first power control parameter set and the second power control parameter set.

3. A user equipment, UE (1000) in a time division duplex, TDD, communication system, the UE comprising:

   a wireless communication module (1030) configured to transceive a signal with a base station, BS; and
   a processor (1010) configured to process the signal,
   wherein the processor is configured to receive a first power control parameter set for a subframe fixed as an uplink subframe and a second power control parameter set for an uplink subframe capable of being changed to a downlink subframe according to an indication of a base station, BS, through a higher layer, and to transmit at least one of a first sounding reference signal, SRS, and a second SRS to a base station, BS, in a special subframe,
   wherein, if both the first and second SRS are transmitted in the special subframe, a transmit power of the first SRS is determined based on the first power control parameter set and a transmit power of the second SRS is determined based on the second power control parameter set.

4. The UE of claim 3, wherein if one of the first and second SRS is transmitted in the special subframe, the processor is configured to determine the transmit power of the SRS based on any one of the first power control parameter set and the second power control parameter set.

**Patentansprüche**

1. Verfahren zum Senden eines Tonreferenzsignals, SRS, durch ein Benutzergerät, UE (1000), an eine Basisstation, BS, in einem Zeitduplex-, TDD, Kommunikationssystem, umfassend:

   Konfigurieren eines ersten Leistungssteuerungsparametersatzes für einen Unterrahmen, der als ein Aufwärtsstrecken-Unterrahmen festgelegt ist, und eines zweiten Leistungssteuerungsparametersatzes für einen Aufwärtsstrecken-Unterrahmen, der gemäß einer Angabe der BS in einen Abwärtsstrecken-Unterrahmen geändert werden kann, durch eine höhere Schicht; und
   Senden mindestens eines von einem ersten SRS und einem zweiten SRS an die BS in einem speziellen Unterrahmen,
   wobei, wenn sowohl das erste als auch das zweite SRS in dem speziellen Unterrahmen gesendet werden, eine Sendeleistung des ersten SRS auf der Grundlage des ersten Leistungssteuerungsparametersatzes bestimmt wird und eine Sendeleistung des zweiten SRS auf der Grundlage des zweiten Leistungssteuerungsparametersatzes bestimmt wird.

2. Verfahren nach Anspruch 1, wobei, wenn eines des ersten oder des zweiten SRS in dem speziellen Unterrahmen gesendet wird, die Sendeleistung des SRS auf der Grundlage irgendeines des ersten Leistungssteuerungsparametersatzes und des zweiten Leistungssteuerungsparametersatzes bestimmt wird.

3. Benutzergerät, UE (1000) in einem Zeitduplex-, TDD, Kommunikationssystem, wobei das UE umfasst:

   ein Drahtloskommunikationsmodul (1030), das konfiguriert ist, um ein Signal an eine Basisstation, BS, zu senden und von dieser zu empfangen; und
   einen Prozessor (1010), der konfiguriert ist, das Signal zu verarbeiten,
   wobei der Prozessor konfiguriert ist zum Empfangen eines ersten Leistungssteuerungsparametersatzes für einen Unterrahmen, der als ein Aufwärtsstrecken-Unterrahmen festgelegt ist, und eines zweiten Leistungssteuerungsparametersatzes für einen Aufwärtsstrecken-Unterrahmen, der gemäß einer Angabe einer Basisstation, BS, in einen Abwärtsstrecken-Unterrahmen geändert werden kann, durch eine höhere Schicht, und Senden mindestens eines von einem ersten Tonreferenzsignal, SRS, und einem zweiten SRS an eine Basisstation, BS, in einem speziellen Unterrahmen,
   wobei, wenn sowohl das erste als auch das zweite SRS in dem speziellen Unterrahmen gesendet werden, eine Sendeleistung des ersten SRS auf der Grundlage des ersten Leistungssteuerungsparametersatzes bestimmt wird und eine Sendeleistung des zweiten SRS auf der Grundlage des zweiten Leistungssteuerungsparametersatzes bestimmt wird.

4. UE nach Anspruch 3, wobei, wenn eines des ersten oder des zweiten SRS in dem speziellen Unterrahmen gesendet wird, der Prozessor konfiguriert ist, um die Sendeleistung des SRS auf der Grundlage irgendeines des ersten Leistungssteuerungsparametersatzes und des zweiten Leistungssteuerungsparametersatzes zu bestimmen.

**Revendications**

1. Procédé de transmission d'un signal de référence de sondage, SRS, par un équipement utilisateur, UE (1000) vers une station de base, BS, dans un système de communication duplex à répartition dans le temps, TDD, comprenant :

   la configuration, par l'intermédiaire d'une couche supérieure, d'un premier ensemble de paramètres de commande de puissance pour une sous-trame établie en tant que sous-trame de liaison montante et d'un deuxième ensemble de paramètres de commande de puissance pour une sous-trame de liaison montante capable d'être changée pour une sous-trame de liaison descendante conformément à une indication de la BS ; et
   la transmission d'au moins l'un parmi un premier SRS et un deuxième SRS vers la BS dans une sous-trame spéciale,
   dans lequel, si à la fois les premier et deuxième SRS sont transmis dans la sous-trame spéciale, une puissance de transmission du premier SRS est déterminée sur la base du premier ensemble de paramètres de commande de puissance et une puissance de transmission du deuxième SRS est déterminée sur la base du deuxième ensemble de paramètres de commande de puissance.

2. Procédé selon la revendication 1, dans lequel si l'un parmi les premier et deuxième SRS est transmis dans la sous-trame spéciale, la puissance de transmission du SRS est déterminée sur la base de l'un quelconque parmi le premier ensemble de paramètres de commande de puissance et le deuxième ensemble de paramètres de commande de puissance.

3. Équipement utilisateur, UE (1000) dans un système de communication duplex à répartition dans le temps, TDD, l'UE comprenant :

un module de communication sans fil (1030) configuré pour émettre et recevoir un signal avec une station de base, BS ; et
un processeur (1010) configuré pour traiter le signal,
dans lequel le processeur est configuré pour recevoir un premier ensemble de paramètres de commande de puissance pour une sous-trame établie en tant que sous-trame de liaison montante et un deuxième ensemble de paramètres de commande de puissance pour une sous-trame de liaison montante capable d'être changée pour une sous-trame de liaison descendante conformément à une indication d'une station de base, BS, par l'intermédiaire d'une couche supérieure, et pour transmettre au moins l'un parmi un premier signal de référence de sondage, SRS, et un deuxième SRS vers une station de base, BS, dans une sous-trame spéciale,
dans lequel, si à la fois les premier et deuxième SRS sont transmis dans la sous-trame spéciale, une puissance de transmission du premier SRS est déterminée sur la base du premier ensemble de paramètres de commande de puissance et une puissance de transmission du deuxième SRS est déterminée sur la base du deuxième ensemble de paramètres de commande de puissance.

4. UE selon la revendication 3, dans lequel si l'un parmi les premier et deuxième SRS est transmis dans la sous-trame spéciale, le processeur est configuré pour déterminer la puissance de transmission du SRS sur la base de l'un quelconque parmi le premier ensemble de paramètres de commande de puissance et le deuxième ensemble de paramètres de commande de puissance.

# FIG. 1

E-UMTS

# FIG. 2

( a ) CONTROL-PLANE PROTOCOL STACK

( b ) USER-PLANE PROTOCOL STACK

# FIG. 3

INITIAL CELL SEARCH | SYSTEM INFORMATION RECEPTION | RANDOM ACCESS PROCEDURE | GENERAL DL/UL Tx/Rx

S308

P/S - SCH & [DLRS] & PBCH | PDCCH/ PDSCH (BCCH) | PRACH | PDCCH/ PDSCH | PUSCH | PDCCH/ PDSCH | PDCCH/ PDSCH | PUSCH/ PUCCH

S301    S302    S303    S304    S305    S306    S307

• DL/UL ACK/NACK
• UE CQI/PMI/RANK REPORT
  USING PUSCH AND PUCCH

EP 3 099 119 B1

# FIG. 4

CONTROL REGION    DATA REGION

PCFICH

PHICH

PDCCH OF UE 1

PDCCH OF UE 2

PDCCH OF UE 3

FREQUENCY

TIME

# FIG. 5

FIG. 6

# FIG. 7

CENTER FREQUENCY A

CENTER FREQUENCY A

BASIC FREQUENCY BLOCK

BASIC FREQUENCY BLOCK

100MHz SYSTEM BW(logical)

UE A(100MHz)

UE B$_1$(20MHz) | UE B$_2$(20MHz) | UE B$_3$(20MHz) | UE B$_4$(20MHz) | UE B$_5$(20MHz)

UE C$_2$(40MHz)

UE C$_1$(40MHz)

EP 3 099 119 B1

# FIG. 8

# FIG. 9

S901

No ⟵ UpPTS symbol number = 2? ⟶ Yes

control power according to power control
parameter corresponding to special subframe

S902

control power of 1-UpPTS according to
first power control parameter

S903

control power of 2-UpPTS according to
second power control parameter

S904

# FIG. 10

1000

**EP 3 099 119 B1**

## REFERENCES CITED IN THE DESCRIPTION

**Patent documents cited in the description**

- WO 2010151196 A1